# EUROPEAN PATENT APPLICATION

(11) **EP 0 663 662 A2**
(43) Date of publication of application: **19.07.1995**
(21) Application number: 94304950.2
(22) Date of filing: 05.07.1994
(51) Int. Cl.: G11B 7/14, G11B 7/12, B41J 2/45, G11B 7/00

(54) **Optical head unit**

(30) Priority: 13.01.1994 JP 2205/94; 13.01.1994 JP 2207/94; 27.04.1994 JP 89511/94
(71) Applicant: Futagawa, Toshinobu, Tokyo (JP)
(72) Inventor: Futagawa, Toshinobu, Tokyo (JP)
(74) Representative: Spall, Christopher John

(57) **Abstract**

An optical head unit including a light emitting array (32), a mirror (34), a light receiving array (46), an objective lens (36), a light sensitive sheet (38) for recording information and a moving device (40) for moving the sheet, for enabling writing/reading of information on the sheet when stationary. The mirror (34) and the objective lens (36) are integrally mounted on a drive portion (38), and the light emitting array (32) and the light receiving array (46) are formed in a stationary portion with the drive portion and the stationary portion constituting the optical head unit.

## Description

The present invention relates to an optical device and, particularly to a data input/output device utilizing an optical unit such as a laser device.

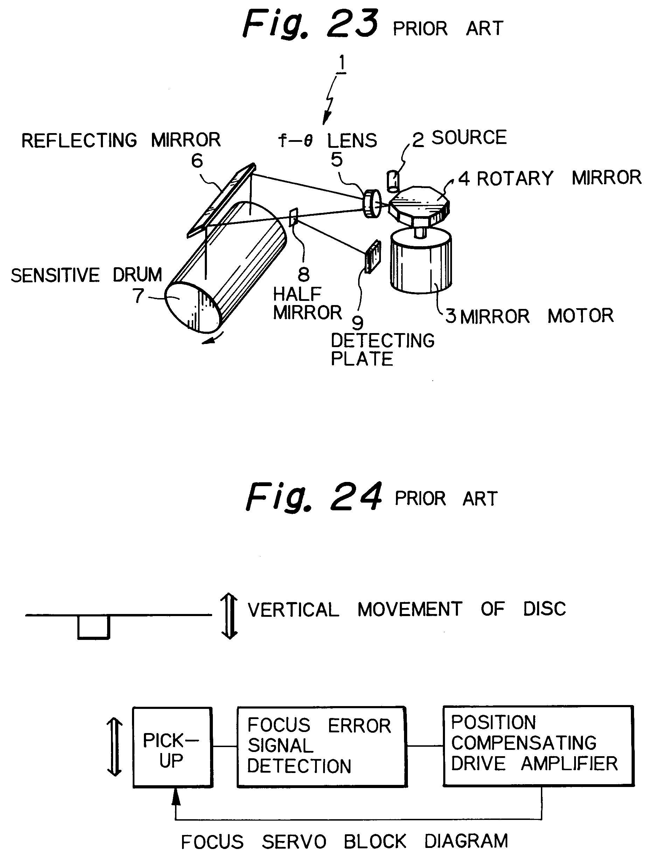

Various data input/output devices have widely been utilized in the industrial field. For example, Fig. 23 shows an example of a fundamental constitution of an optical device applied on a printing device, or a laser printer 1. In the drawing, the laser beam emitted from a source 2 of the laser light is reflected by a rotary mirror 4 having a decahedron shape and being rotated by a mirror motor 3 around a predetermined axis of rotation. The laser light reflected by the rotary mirror 4 is directed onto a reflective mirror 6 through a f-Θ lens 5 which acts to parallelize or to focus the arcuated scanned light by the rotary mirror along a straight line on a photosensitive material. The laser light refracted by the mirror 6 is irradiated on a sensitive drum 7, and sensitizes a surface of a sheet such as a photosensitive film being wound on a drum 7 and moving. The source 2 of the laser light may be a gas laser such as He-Cd, Ar, He-Ne and the like, or a LED array utilizing a plurality of light emitting diode arranged in close order. In the drawing, shown at numeral 8 is a half mirror enabling the detection of the laser light passed through the f-Θ lens 5 by a detecting plate 9.

Further, Fig. 24 shows a prior art focus servo mechanism utilized in the technical field of a compact disc. The mechanism detects, by means of a position sensor and the like, fluctuation (a focus error signal) or vertical movement of the surface of a rotating disc, which is regulated within a range of ± 0.5 mm and maintains a predetermined distance between a pick-up and an objective lens, the pick-up position being adjusted by a position compensating drive amplifier.

In the prior art optical system, it is required to rotate the rotary mirror 4 at a correctly aligned condition around the predetermined axis of rotation for reflecting correctly the laser light in the same direction and directing it to the light receiving surface or to the reflective mirror 6. However, the rotary mirror 4 is usually thick (such as about 10 mm) and heavy, and the size is large (the diameter of the inscribed circle is about 60 mm), and the rotational speed is great (such as 2,000 to 1,100 rpm). Thus, the rotary mirror 4 suffers from vibration or deflection. Therefore, the service life of prior art devices is very short such as 3 (three) years. Further, in prior art optical systems it has been required to utilize f-Θ lens 5 for parallelizing laser light reflected by the rotary mirror 4 and, for focussing the arcuated scanned light from the rotary mirror 4 along a straight line on the sensitive material. However, it is required to change the specification of the f-Θ lens 5 in accordance with the type of the light source, the rotational speed of the rotary mirror, the number of the surfaces of the rotary mirror, the dimension of the rotary mirror and the like, which causes an increase in the cost of the mirror including the design cost. Further, as explained above, the prior art devices incorporating the rotary mirror, the mirror motor, the f-Θ lens and the like are considerably large in size, and most of them are of the installation type, and are seldom used as a portable type. Further, in the prior art optical devices, the sheet or the card bearing the information is translated thus decreasing the input/output speed of the information.

Further, in devices utilizing well known compact discs, the surface of the disc vibrates in the vertical direction which requires, to compensate vibration, complicated and expensive position sensors, focus servo mechanism and the like, which restricts the amount of information able to be handled and increases the access time.

To solve the above problems, the inventors have proposed in Japanese Patent Application No. 5-333177 an optical head unit 10 as shown in Fig. 25, which enables the omission of rotary mirror having a short service life and the expensive f-Θ lens, and to reduce the overall size of the device by omitting the above described large sized parts, thus enabling use of the device on portable equipment. Further, according to the head unit 10, the input/output operation is performed at the stationary condition of the tape, the amount of writable information increases, and the operational speed is increased.

The optical head unit 10 includes a multi-head 12, at least one mirror 14, a plate-like objective lens 16, a sheet 18 and drive means 20 for driving the sheet 18. The multi-head 12 is constituted of a plurality of laser diode array 24 arranged along the widthwise direction of the sheet 18, the mirror 14 is located at an angular position such that the optical information from the multi-head 12 or from the sheet 18 is refracted vertically to the sheet 18 or the multi-head 12, a plate-like objective lens 16 is disposed the sheet 18 to converge the light from the mirror or to diverge the light from the sheet 18, and the sheet 18 is adapted to accept the light information.

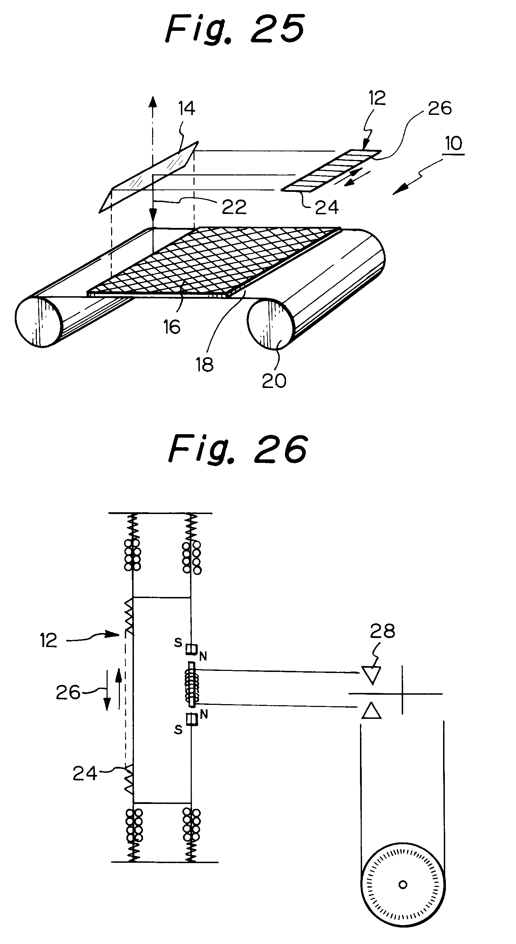

Further, to increase the amount of information or input/output provided on or from the sheet 18, drive means shown in Fig. 26 is also proposed in which, the laser diode array 24 is reciprocatingly or vibratingly moved in arrows 26 directions by switching a rotary switch 28.

The above described invention substantially lengthens the service life since a polygon-shaped rotary mirror is not employed, and decreases the cost with the omission of the f-Θ lens. In addition, the size of the device can be reduced. Further, the input/output operation is performed on the stationary tape, which prevents error operation due to the deflection of the tape. The plate-like objective lens enables the input/output of concentrated information such as 3 microns or less, which enables input/output of very high resolution. Further, the amount of storage or access can substantially be increased and the access time can be decreased substantially.

Further, according to the above described invention, the writing operation is performed on a stationary sheet on which a plate-like objective lens is located, and over which contracted light is scanned, thereby making the final spot on the sheet. While, during the reading operation from the sheet, the light in the inverse direction is utilized. Since the sheet is stationary, the distance between the sheet and the plate-like objective lens is maintained constant, which enables the omission of complicated focus servo mechanism and the like, thereby simplifying the size of the device and increasing substantially the amount of possible access, and decreasing the access time.

Although the invention of the prior application can attain the above described effects, the laser diode array 24, the half mirror 14, the objective lens 16 and the like constituting the optical head unit are independently provided, which is time consuming in the assembling operation and, the electric current switching operation by the rotary switch is thereby made somewhat unreliable.

An object of the invention is to provide an optical head device omitting the above described defects in the prior application and, according to the present invention, there is provided an optical head unit including a light emitting array, a mirror, a light receiving array, an objective lens, a light reacting sheet for recording information, and a drive means for driving the sheet, for reading/writing the information on/from the sheet during the standstill condition of the sheet, in which, there is provided means for enabling to form a portable type device, enabling the input/output operation at the standstill condition of the tape, and increasing the amount of writing information and increasing the operation speed.

Particularly, the optical head unit according to the invention includes an integral unit constituted of a laser diode array, a half mirror, an objective lens and the like, with the integral unit being arranged such that the optical information from the multiple-head or from the sheet is refracted vertically to the sheet or to the multiple-head, with the sheet being in the standstill condition. Further, the information being written on or read from the sheet can easily be affirmed by providing a light receiving array for receiving the light passing through or refracted by the half mirror. Further, the electric current exchanging operation is able to be reliably performed by providing a hole or opening in a member movable together with the laser diode array and, by detecting the light passing through the hole by means of a limit switch. Further, a predetermined mark is provided on the sheet and is utilized also in exchanging the electric current.

Further objects and advantages of the invention will become apparent from the following descriptions in conjunction with the attached drawings in which:
Fig. 1 is an explanatory perspective view showing principle of operation of an optical head unit utilized in an optical head unit assembly of the present invention;
Fig. 2 is a view showing an embodiment of an optical head assembly integrally having a light emitting portion, a light receiving portion, a mirror and a lens according to the invention;
Fig. 3 is an explanatory sectional view of the optical head unit of Fig. 2;
Fig. 4 is a view showing another example of the path of the light according to the optical head unit of the invention;
Fig. 5 is another example showing the path of the light of the optical head unit of the invention;
Fig. 6 is a further example of the path of the light;
Fig. 7 is a perspective view showing another example of the optical head unit according to the invention;
Fig. 8 is a view showing the optical head unit of the invention in the operational condition;
Fig. 9 is a view showing the device for reciprocatingly moving the optical head unit of the invention;
Fig. 10 is a view showing an arrangement of sheet being adapted for use with the optical head unit of the present invention;
Fig. 11 is a view similar to Fig. 10, but showing a second example;
Fig. 12 is a view showing the arrangement of sheet and the optical head unit according to the invention, with the arrangement of the sheet being a third example;
Fig. 13 is a schematic view showing a mechanism mounting the optical head unit and rotatable around a level roller in the embodiment of Fig. 12;
Fig. 14 is a schematic view showing an arrangement of the sheet and optical head units according to the invention, and being adapted for high speed scanning;
Fig. 15 is a schematic view showing a driving unit and an optical head unit according to another embodiment of the invention;
Fig. 16 is a view showing a modified form of Fig. 15;
Fig. 17 is a view similar to Fig. 13 which is adapted to move the optical head unit shown in Figs. 15 and 16 along a curved surface;
Fig. 18 is a view similar to Fig. 8 which is adapted to move the optical head unit shown in Figs. 15 and 16 along a straight line;
Fig. 19 is a view showing a modified form of the optical head unit of Fig. 16;
Fig. 20 is a plan view or a view as viewed from upper side of the optical head unit of Fig. 19;
Fig. 21 is a schematic view showing the working principle of a further embodiment of the invention;
Fig. 22 is a schematic view showing the working principle of a still further embodiment of the invention;
Fig. 23 is a view showing a prior art optical head device;
Fig. 24 is a block diagram of a prior art focus servo mechanism utilized in a compact disc device and the like;
Fig. 25 is a schematic view showing the principle of an optical head unit; and
Fig. 26 is a view showing a mechanism for vibratingly moving an optical head unit.

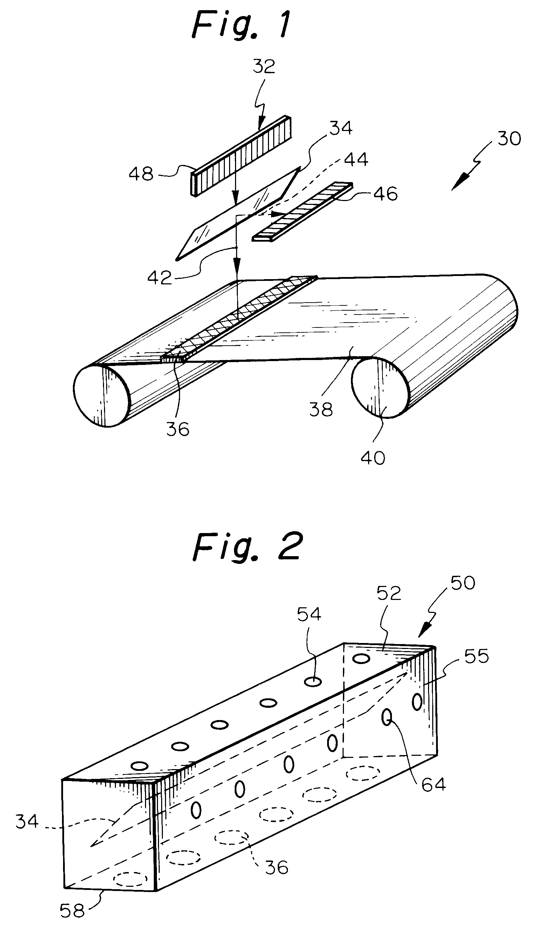

Fig. 1 is a view showing the working principle of an optical head unit 30 according to the present invention. In the drawing, shown at numeral 32 is a light source being formed of a multiple-head to which a plurality of optical fiber tubes are connected, at 34 is a mirror, preferably a half-mirror, at 36 is an objective lens, at 38 is a sheet such as a card, a film and the like, at 40 is a sheet driving device for displacing the sheet, at 42 is the path of the light emitted from the light source 32, at 44 is the path of the light refracted and reflected by the half mirror 34, and at 46 is a light receiving array constituted of such as a plurality of optical fiber tubes for sensing the light passing along the path 44.

The optical head unit 30 according to the invention can be utilized as an input device and an output device, but the description will be made with respect to an input device. However, it will easily be understood by those skilled in the art that the unit can be utilized as a data output or reading device by directing the light on the front surface of the sheet 38 having information beforehand and reading the light reflected there from and passing through the path 42 in the inverse direction, or by providing a light emitting member on the lower side of the sheet and reading the light passing through the sheet and through the path 42 similarly.

The light source 32 forming the multiple head is preferably constituted of a laser diode array 48 including a multiple number of optical fiber tubes having a diameter of about 10 microns respectively and being arranged contiguously in one row along the length corresponding to nearly the width of the sheet with a light emitting diode being connected to one end each of the optical fiber tubes. Such a construction is preferable for reducing the weight of the array 48 and increasing the number of the heads. The array 48 enables continuous writing into or reading from the sheet in a stationary state by displacing the mirror 34 sequentially and successively by an amount corresponding to one line. It is also possible to form the length or width of the array 48 to be smaller than the width of the sheet and to form the array 48 movable in the direction of the width of the sheet 38.

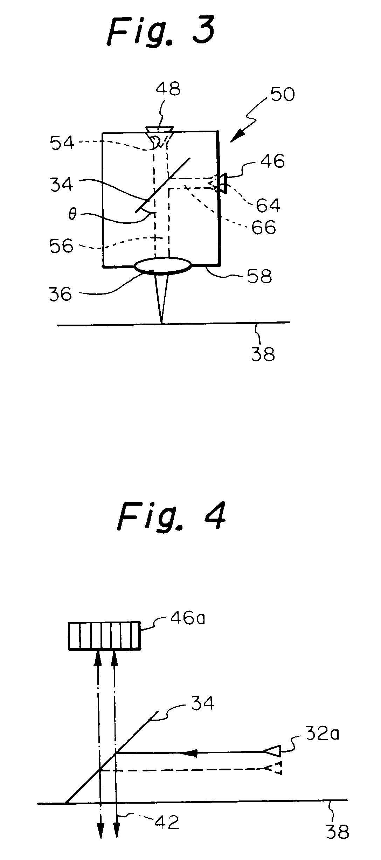

Fig. 2 is a schematic perspective view of a light emitting or receiving unit assembly 50 according to an embodiment of the present invention. Particularly, the assembly 50 is an integral assembly of the laser diode array 48, the half mirror 34, the light receiving array 46 and the objective lens 36 in the optical unit assembly 50 shown in Fig. 1. The light receiving/emitting assembly 50 is a generally rectangular shaped elongate structure. In the upper surface 52, there are provided a plurality of first openings 54 for mounting laser diodes respectively. These laser diodes constitute the light emitting array 48 which emits the light 56 as shown in Fig. 3. On the lower surface 58, a plurality of objective lens 36, which is known in the technical field of compact discs and the like, are mounted. The lens 36 may be mounted on the assembly 50 by fitting or imbedding process, or may be secured by a bonding agent or welded by utilizing resin and the like. Preferably, the lens 36 can converge the light into a diameter of about 1 - 1.5 microns or less at the surface of the sheet 38. In the central portion of the assembly 50, there is mounted a half mirror 34 making an angle Θ (Fig. 3) with respect to the light 56. In one side surface 55 of the assembly 50, there are provided a plurality of second openings 64, to which a light receiving array 46 is secured. As shown in Fig. 3, refracted light 66 extends between the light receiving array 46 and the path 56 of downward light, which shows that the light from the surface of the sheet is refracted by the half mirror 34 and received by the light receiving array 46. Preferably, the assembly 50 is made of a light weight synthetic resin material, and the half mirror 34 and the objective lens 36 are embedded into the plastic material to form an integral assembly.

In the embodiment of Figs. 1 and 2, the laser diode array 48 emits the light downward, however, the array 48 may be mounted on the second openings 64 in the side surface with the light receiving array being mounted in the first opening 54 in the upper surface thereby, as shown in Fig. 4, it is possible to provide the light emitting portion 32a on the side surface and the light receiving portion 46a on the upper surface.

According to the arrangement of Fig. 4, a detecting device including the light receiving portion 46a for confirming the writing condition is disposed on the path of the light shown in chain dot line directed upward from half mirror 34 and, the writing operation is performed on the stationary sheet 38 one line by one line, thus, it is required to displace the mirror 34 forward or backward or in a direction perpendicular to the direction of respective lines. Thus, it is required to displace the light receiving portion 46a and the mirror 34 simultaneously, which requires a mechanism for synchronizing the movement.

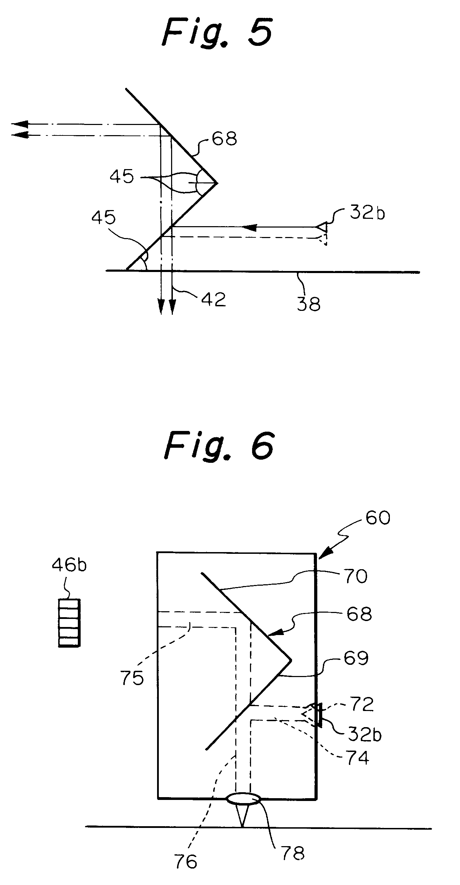

Figs. 5 and 6 show an embodiment which does not require the synchronized movement of the light receiving portion 46b and the mirror. The half mirror 34 in Fig. 4 is substituted by a mirror 68 of rectangular prism-like shape. In Fig. 5, the light emitting from the laser diode array 32b is reflected by one surface of the prism mirror 68 and directed to the surface of the sheet vertically through the path 42. A portion of the light is refracted vertically upward and, thereafter, reflected at another surface of the prism 68 and, directed in the leftward direction as shown in chain dot line which is parallel to the surface of the sheet 38. Thus, it is possible to secure the light receiving array on the frame of the device irrespective to the movement of the sheet 38.

Fig. 6 shows an assembly 60 incorporating a prism shaped mirror 68. The assembly 60 is substantially similar to the assembly 50 of Fig. 3, and differs in that the half mirror 34 is integrally received in the assembly 50 in Fig. 3 and, the half mirror 68 of rectangular prism-like shape is integrally received in the assembly 60. Particularly, a laser diode array acting as the light source 32b is mounted in first openings 72 provided in one side surface of the assembly 60 and the light 74 from the light source 32b is directed to a surface 69 of the prism shaped mirror 68 horizontally, and the surface 69 refracts the light 74 into the light 76 of the vertical direction. A reflective surface 70 of the mirror 68 reflects the light 76 into another horizontal light 75. The light receiving array 46b is mounted on a frame (not shown in the drawing) and independently and separately from the assembly 60.

The vertical path 76 of the light extends to the lower surface of the assembly 60. An objective lens 78 is provided on the lower surface of the assembly 60 similarly to the case of the assembly 50 of Fig. 3, and acts to converge the light along the path 76 to a predetermined diameter such as 1 - 1.5 microns or less. Similar to the embodiment of Figs. 2 - 4, in the embodiment of Figs. 5 and 6 it is also possible to change the location of the light receiving array 46b and the light emitting array 32b with one another, or to use as an output device to read the sheet 38 having the information beforehand.

As described above, there are embedded optical fibers constituting the light emitting array 32 and the light receiving array 46 respectively in the first openings 54 and the second openings 66 of the assembly 50, and optical fibers constituting the light emitting array 32b in the first openings 72 of the assembly 60.

Thus, the light information emitted from the light source embedded in the first openings 54 or 72 of the assembly 50 or 60 passes through the mirror 34 or the rectangular prism 68 and directed vertically downward, hereafter, converged by the objective lens 36 or 78 to effect the writing operation into the sheet.

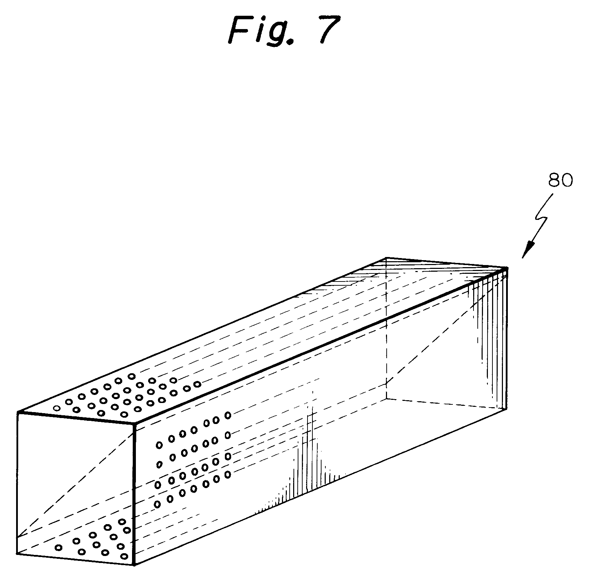

The assembly 80 shown in Fig. 7 has, in the upper surface and a side surface a plural rows of first openings and second openings respectively and, similarly, in the lower surface, a plural rows objective lenses, thus, the assembly 80 enables to write/read simultaneously plural lines or one page. This construction can easily be applied to the embodiment utilizing the rectangular prism shown in Fig. 6. In the embodiments of Figs. 2 and 6, the ends of optical fiber tubes constituting the laser diode array or the light receiving array are embedded in the first openings such that the light is directed vertically or generally parallel to the surface of the sheet 38 such as a film, an optical tape, an optical card and the like.

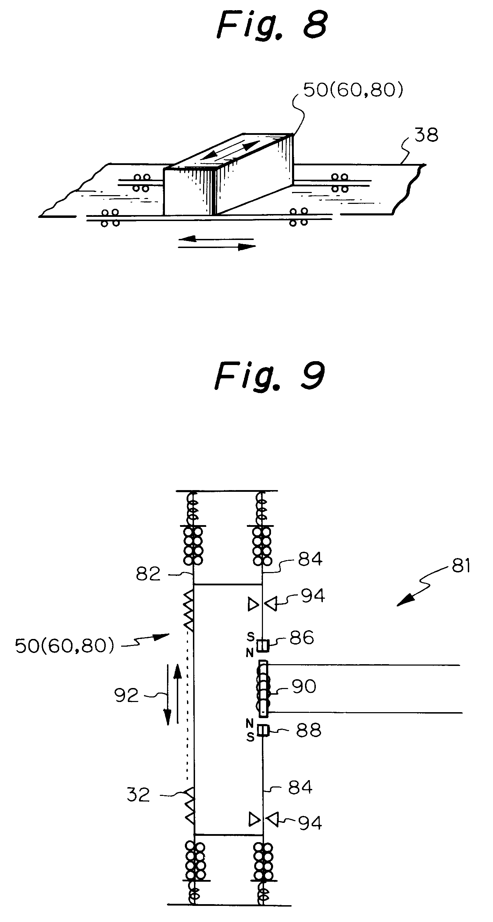

These assemblies 50, 60 and 80 are reciprocatingly movable in the direction of movement the sheet 38 and in the direction perpendicular thereto as shown in Fig. 8. A reciprocating or vibrating mechanism 81 shown in Fig. 9 comprises a support 82 supporting the assembly 50, 60 or 80 with opposite ends of which being supported on the frame not shown in the drawing through bearings, preferably through low friction bearings such as pneumatic bearings, springs and the like. Driving members 84 and 84 are secured to the support 82 to move together with the support 82. The outer ends of the members 84 and 84 are, similar to the support 82, supported on the frame through bearings, preferably through low friction bearings such as pneumatic bearings, springs and the like. Permanent magnets 86 and 88 are mounted on the inner ends of the driving members 84 and 84. An electromagnet 90 is disposed between the permanent magnets 86 and 88 and is secured to the frame. The fixed magnet 90 and the permanent magnets 86 and 88 constitute driving means for vibratingly moving the assembly 50, 60 or 80 and the laser diode array 32 in the directions of arrows 92 in Fig. 9.

In Fig. 9, the permanent magnets 86 and 88 are arranged such that the opposing surfaces of the magnets have the same polarity such as N-pole (shown in the drawing) or S-pole. The electric current is applied to the electromagnet 90, so that S-pole (N-pole) is generated in the end of the magnet 90 opposing the magnet 86, then, the magnet 86 is attracted to the magnet 90 and, the driving member 84 secured to the magnet 86, and the support 82 and the array 32 integrally secured to the member 84 move in the same direction. Just prior to the contact of the magnets 86 and 90, the direction of the electric current in the electromagnet 90 is switched by optical switches 94 so that the polarity of the magnet 90 is reversed. The magnet 86 is repelled by the magnet 90 and the magnet 88 is attracted to the magnet 90, and the array 32 starts to move in the opposite direction. By repeating the above operation, the array 32 and the assembly 50, 60 or 80 rapidly move or vibratingly move in the directions of arrows 92. Thus, the light emitted from the array 32 vibratingly move at high speed through the distance defined by the distance between the magnets 86 and 88 and the magnet 90 such as a few microns. By vibratingly moving the assembly 50, 60 or 80 at high speed, it is possible to reduce the distance between adjacent light emitted from adjacent optical fiber tubes such as about 3 microns or less, even though the diameter of each tube is in the range of 10 microns.

The optical switches 94 are sensors for detecting openings provided in opposite sides of the driving member 84, and switch the direction of the electric current when the opening takes a predetermined position. Namely, the switch is a kind of limit switch. Incidentally, it is also possible to provide on the surface of the sheet 38 a mark such as an end mark, a start mark and the like by, for example, photoresist treatment, and to detect the mark by a photoresist sensor known per se for switching the electric current. Preferably, at least two of these means are provided with one of which acting as the main switch, and the other as emergency or safety switch. There is also provided similar driving means for reciprocatingly moving the assembly 50, 60 or 80 in the direction parallel to the moving direction of the sheet 38 as shown in Fig. 8.

In the embodiment of Fig. 4 or 6, the light emitted from the light emitting array 32 is refracted by the mirror 34 or 69 and directed vertically downward toward the surface of the sheet, and the mirror 34 or 69 makes the angle of 45 degrees to the surface of the sheet, but it is not required to fix the angle by 45 degrees provided that the light from the array 32 is directed vertically downward toward the surface of the sheet through the mirror 34 or 69. Further, it is not mandatory to form the mirror 34 a half mirror (translucent beam splitter), but the half mirror enables confirmation of the information being written by arranging a light receiving element, a line sensor, an image pickup element and the like to detect the light shown by chain line 44 in Fig. 1. It will be noted that such a confirmation may also be effected by means shown in or substantially similar to that shown in Fig. 23. The half mirror 34 is advantageous in simplicity in the structure, and reduction in the size.

The light converged by the objective lens 36 or 78 to have a diameter of about 1 - 1.5 microns acts to write information on the surface of a sheet material 38 such as a film, an optical card and the like being disposed just below the lens 36 or 78 at the distance of such as about 1 - 1.5 microns or less.

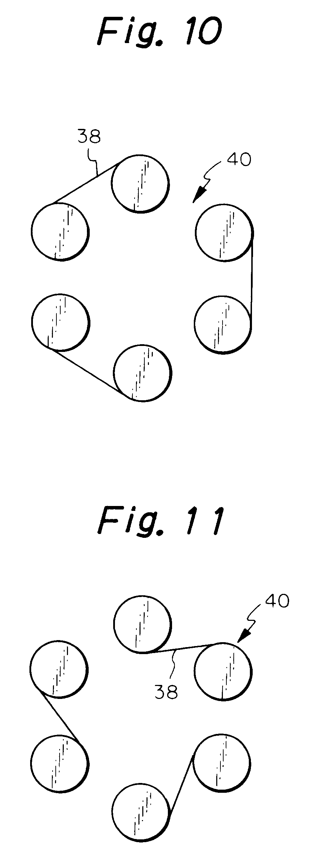

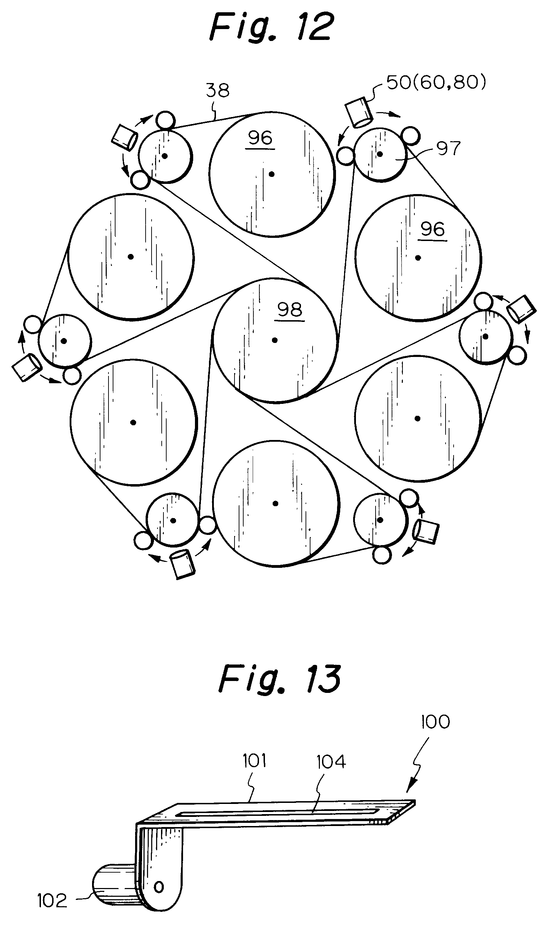

Figs. 10, 11 and 12 show examples of the arrangement of the sheet 18 such as an optical tape, a film and the like. Such an arrangement is preferable, similar to the prior application, in that the amount of storage is large, the amount of possible access is large, the access time is short and the like. Fig. 10 shows an example having 3 (three) surfaces, with the information mounting surface of the sheet 38 being disposed outside, and the opposite ends being wound on a pair of rollers respectively. Figs. 11 and 12 show examples having 6 (six) information mounting surfaces. In Fig. 11, opposite surfaces of the sheet are utilized as information mounting surfaces, and one of each pair or rollers is adapted to wind the sheet with one of the surfaces thereof inside and the other of each pair of rollers is adapted to wind the film with the other surface inside. While, the embodiment of Fig. 12 is constituted of one central roller 98 and six peripheral rollers or bobbin rollers 96 and, one end of each sheet 38 is connected to each peripheral roller 96 and the other end of each sheet is connected to the central roller 98. Further, level rollers 97 are arranged between the central roller 98 and respective bobbin rollers 96. And the assembly 50 or the like is disposed opposing each level roller 97 and rotatably around the axis of rotation of the level roller. When the sheet 38 arrives on the level roller 97, the assembly 50 (60, 80) is moved around the rotating axis of the level roller 97 and along a coaxial path by a distance corresponding to several lines or full one page or more for effecting a predetermined input/output operation. In either of the embodiments of Figs. 10, 11 and 12, the distance between the sheet and the optical unit assembly can be maintained constant, and the focus is maintained correct, thus, the prior art focus servo mechanism can be omitted. Further, in decreasing the size of the device, the embodiment of Fig. 12 is most preferable, since it is possible to form the device as an automatic loading type by forming the central roller to a replaceable type with the peripheral rollers being mounted on a frame. Further, in the embodiment of Fig. 12, the optical unit assembly is mounted on a bed 101 of a generally L-shaped supporting member 100 as shown in Fig. 13. A motor 102 is mounted on the supporting member 100, with the rotating axis of the motor 102 aligning the central axis of the level roller 97. Thereby, the assembly 50 (60, 80) can move in the directions of the arrow in Fig. 12 around the level roller 97 at a predetermined speed. A slit 104 is provided in the supporting member 100, and the light from the optical unit assembly toward the sheet 38 passes through the slit 104. The motor 102 may be selected from a slide motor, a spindle motor, a rack and pinion, a feed screw, a swing arm, a linear motor and the like. The unit assembly mounted on the support member 100 may movably mounted through means similar to that shown in Fig. 9.

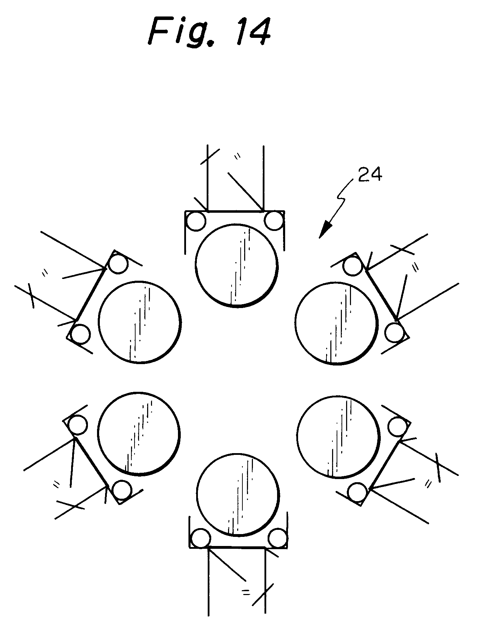

Fig. 14 shows another schematic view enabling six surfaces of films being simultaneously accessed. Incidentally, in the embodiments of Figs. 10 and 11, the access can be effected at straight line portions between the rollers of respective sheets. When the writing is effected directly on the sheet located on the circumference of the roller, it is required to follow the change in the diameter of the roller, which requires a suitable focus servo mechanism. The inventors have proposed some preferable construction in a prior application.

For assuring the parallelism between the sheet and the optical system can be assured by providing a reference line or a guide line on the sheet and, detecting the angle of dislocation between the guide line and the optical system, and adjusting automatically by feed-back process the angle of the optical system including an optical head unit such as a laser array or an optical fiber array.

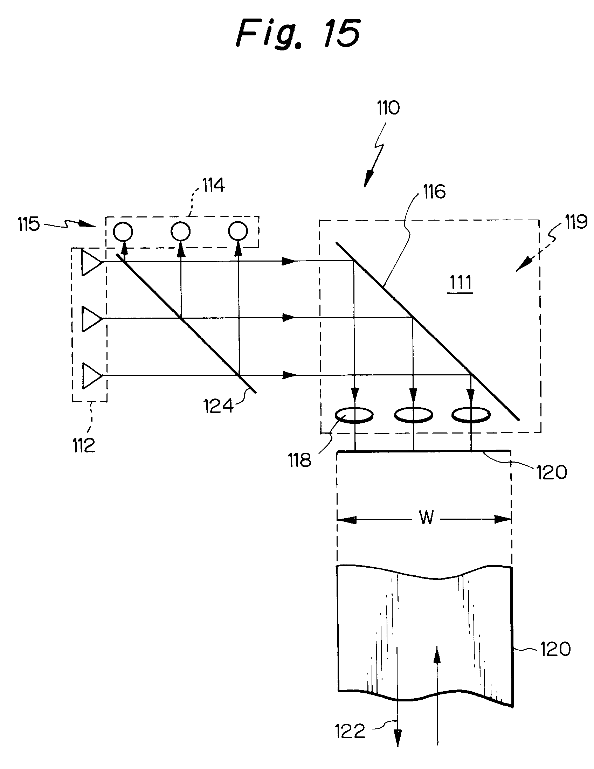

In the above described embodiments, the light emitting or receiving unit assembly 50, 60 or 80 vibratingly moves together with the light emitting/receiving array being connected with the assembly through wires and the like, and there is a tendency that a connecting portion or the wire may rupture or break. Fig. 15 through Fig. 22 show embodiments preventing such discrepancies.

Fig. 15 is an explanatory view showing the construction of an optical head unit 110 for avoiding the vibrations. In Fig. 15, the light emitting array 112 and the light receiving array 114 constitute a fixed portion 115 secured to a frame and the like (not shown in the drawing), and a reflective mirror 116 and an objective lens 118 are assembled as a moving unit assembly 111 which constitutes a moving portion 119. Thus, the optical head unit 110 is constituted of the fixed portion 115 and the moving portion 119. On the lower portion of the moving unit assembly 111, a series of lenses 118 is arranged in the direction perpendicular to the moving direction 122 of the sheet 120 as shown in Fig. 15. In the optical head unit 110, the light emitted from the light emitting array 112 being disposed upper and sidewise portion of the sheet and vertically thereto passes through a half mirror 124, is refracted by a reflective mirror 116, is converted by the lens 118, and reaches the sheet 120. The reflective light from the sheet 120 is reflected by the mirror 116, refracted by the half mirror 124 and read by the light receiving array 114. It is possible to arrange the half mirror 124 to be movable together with the portion 119.

In the embodiment, when the moving unit 111 is vibratingly moved in the widthwise direction (W) of the sheet 120 by such as the reciprocatingly vibrating mechanism 81 as shown in Fig. 9, the unit 111 enables to input the information on the surface of the sheet 120 in the direction perpendicular to the moving direction 122 of the sheet 120 at a minute distance. It will be noted that the light emitted from the light emitting array 112 is switched in accordance with each of the vibrating movement of the moving unit 111.

When the light emitting array 112 is disposed parallel to the moving direction 122 of the sheet 120, it is possible to write/read a plurality of lines at one time by changing the position of the moving unit assembly 111 and arranging the position of the lens parallel to the direction 122. It will be understood that the direction of the vibration of the assembly 111 is parallel to the direction 122 in such a case. Further, if required, the laser diodes constituting the light receiving array 114 may be arranged, different from the one line arrangement shown in the drawing, obliquely, which is advantageous in accurate confirmation.

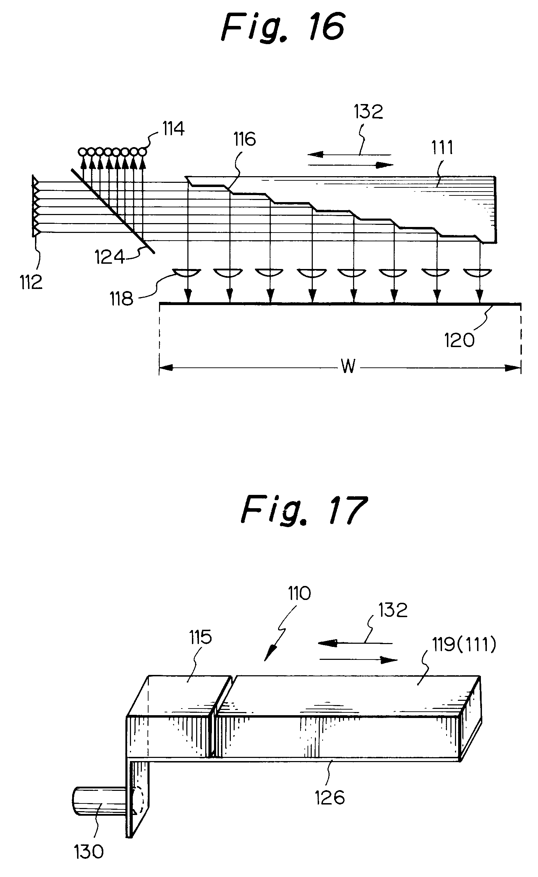

In the embodiment of Fig. 15, the size of the optical head unit 110 constituted of the fixed portion 115 formed of the light emitting array 112 and the light receiving array 114, and the drive portion 119 formed of the moving unit assembly 111 increases when the width (W) of the sheet 120 increases. In such a case, the reflective mirror 116 of the moving unit assembly 111 constituting the drive portion 119 is formed in a step-like shape as shown in Fig. 16, and the lens is arranged on each path of the reflected light, whereby the problem is solved. It will be understood the device can easily be utilized as a reading device by interchanging the locations of the light emitting array and the light receiving array.

Fig. 17 is similar to Fig. 13, but showing a device for mounting the optical head unit assembly 110 shown in Fig. 15 or 16 on the sheet driving device shown in Fig. 12. The optical head unit 110 constituted of the fixed portion 115 and the driving portion 119 and mounted on a supporting member 126 is rotatable by a motor 130 around the axis of the level roller 97 and in the direction of arrows shown in Fig. 12 and, further, the driving portion 119 reciprocatingly moves on the supporting member 126 in the directions of the arrows 132 by means such as shown in Fig. 9.

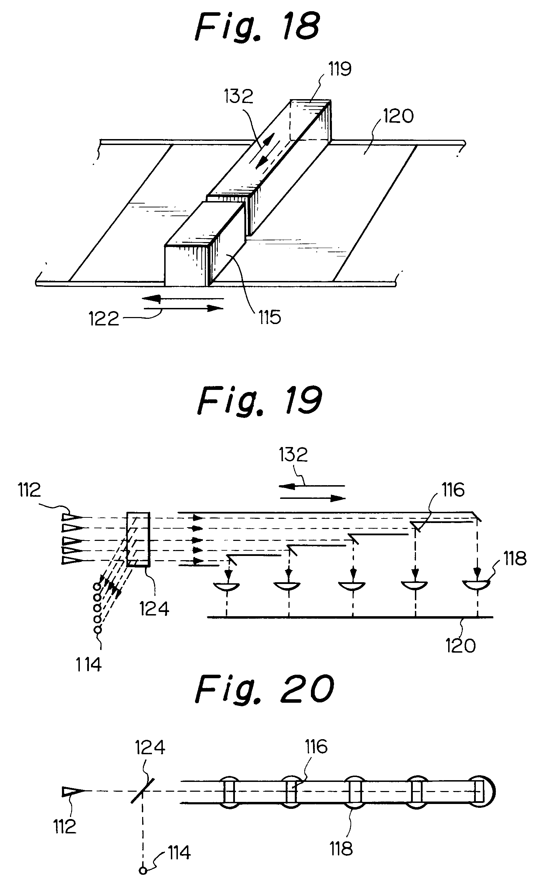

Fig. 17 shows a mounting device for mounting the optical head unit assembly 110 acting on the sheet which is moving along the curved surface of the roller, and Fig. 18 shows a mounting device for mounting the optical head unit assembly 110 acting on the sheet which is moving along a flat surface and similar to Fig. 8. There are provided supporting members (not shown in the drawing) above the surface of the sheet and extending in the direction of the width of the sheet, and the optical head unit assembly 110 consisting of the fixed portion 115 and the driving portion 119 is mounted on the supporting members. The supporting member is generally similar to the embodiment of Fig. 8 and, is reciprocatingly moved by means similar to the reciprocating vibration mechanism 81 shown in Fig. 9 and in the directions 122 above the surface of the sheet 120. Further, the driving portion 119 vibratingly moves in the directions of arrows 132 on the supporting member by such as means disclosed in Fig. 9.

In the embodiment shown in Fig. 16, the light emitting array 112, the light receiving array 114, and the moving unit assembly 111 are arranged generally on a straight line extending perpendicular to the moving direction 122 of the sheet 120, and stepped reflective mirror 116 acts to reflect the optical information from the location most remote (most upper in Fig. 16) from the surface of the sheet 120 to the position nearest (left side in Fig. 16) to the light emitting array 112. Thus, there is a tendency that the light emitted from the light emitting array 112 and directed to the mirror 116 and the light refracted by the mirror 116 and directed to the sheet 120, and the light refracted by the half mirror 124 and directed to the light receiving array 114 and the light emitted from the light emitting array 112 and directed to the mirror may cause interfere with each other. Fig. 19 enables such interference, to be avoided as the light receiving array 114 is arranged perpendicular to the surface defined by the light emitting array 112 and the moving unit assembly 111, and the stepped reflective mirror 116 is provided so that the optical information from the position most upward from the surface of the sheet 120 is directed to the position on the sheet 120 most remote from the light emitting array 112 (the right most position in Fig. 19). As a result, the light refracted by the mirror 116 and directed to the sheet 120 and the light emitted from the light emitting portion 112 and directed to the mirror 115 does not intersect, and the light refracted by the half mirror 124 and directed to the light receiving portion 114 and the light emitted from the light emitting portion 112 and directed to the mirror 124 does not intersect, whereby interference is avoided.

Fig. 20 is a plan view of the embodiment of Fig. 19, and shows clearly that the light refracted by the half mirror 124 and directed toward the light receiving array 114 and the light emitted from the light emitting portion 112 and directed to the mirror 116 does not interfere.

It will be understood that it is possible to attain a minute writing/reading operation in the moving direction of the sheet when a unitary assembly is constituted of the half mirror 34 and the objective lens 36 in Fig. 1, and the assembly is vibrated in the moving direction of the sheet.

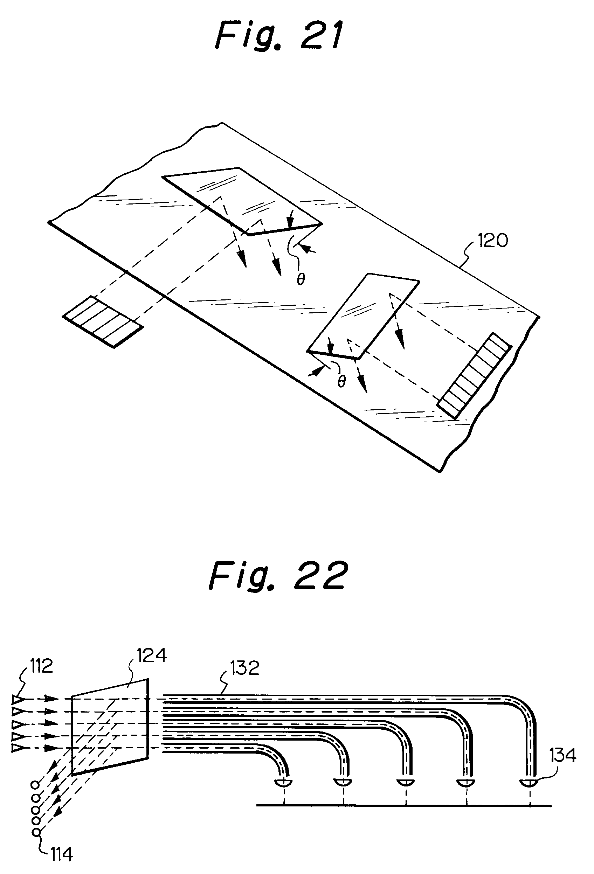

Fig. 21 is a schematic view for attaining minute writing or reading operation in the direction parallel to or vertically intersecting the moving direction of the sheet. There are provided a unitary assembly consisting of the mirror 34 and the objective lens 36 of Fig. 1, and the unit assembly shown in Fig. 15. For avoiding the interference between the light, the height from the sheet 120 of one optical head unit A and that of the other unit B are changed with one another, and the movable mirrors are connected.

Fig. 22 shows another embodiment, in which, the stepped reflective mirror 116 shown in Fig. 19 for reflecting the light is substituted by optical fiber tubes receiving the light at one end of each tube and transmitting the light from the other end of the tube and directing the light through an objective lens to the sheet. In the embodiment of Fig. 22, the optical information emitted from the light emitting portion 112 is received, through a half mirror 124 (similar to that shown in Fig. 19), by a bundle of optical fiber tubes 132 at one end of each tube. Then, the optical information is transmitted to the other end of each optical tube and through a series of objective lens 134, which lens is attached to or spaced from the other end of the tube, and finally to the sheet. The bundle of the optical fiber tubes may constitute a moving unit assembly, then, the device can attain advantages similar to aforementioned embodiments. It is possible to vibrate the objective lens 134 together with the moving unit assembly, or to secure the objective lens to a frame. Further, it is also possible to vibrate only the outer end portions of the optical fiber tubes, which is advantageous in reducing the weight.

It will be noted that the light emitting array and the light receiving array in the embodiments of Fig. 15 through Fig. 22 may, similar to the embodiments of Fig. 1 through Fig. 7, be exchanged.

According to the optical head unit of the invention, a polygonal rotary mirror of prior art device having a short service life is not provided. Thus, the service life of the unit can be substantially extended. Further, it is not required to use an expensive f-Θ lens or polygonal rotary mirror, which enables to a substantially reduction in cost, to reduce the size of the unit and, to extend the service life. Further, data input/output operation is performed with the sheet or the tape being at a standstill. Thus, error operation due to the deflection of the sheet can be prevented, and the plate-like objective lens enables aggregated spot-like input of a size in the range of 3 microns or less which enables input/output of information at a high resolution. Further, the arrangement of the tapes according to the invention enables a substantially increase in the amount of accessible information, and to decrease the access time.

Further, according to the invention, the light emitting array, the light receiving array, the mirror and the lens are assembled integrally as a unit assembly, thus, it is very easy to assemble, handle and maintain. Further, the lens is retained at a predetermined positional relationship relative to the light emitting portion and the light receiving portion, thus, troublesome adjustment operations can be avoided and the writing or reading operation can be effected at very high accuracy.

Further, according to the invention, during the writing operation, the unit assembly integrally having the objective lens is located relative to the surface of the sheet being in the standstill condition, and the light being converged beforehand is scanned on the sheet, thereby being output on the sheet as the final spot. During the reading operation, the light in the path of inverse direction is utilized. In either of the cases, since the sheet is maintained in the standstill condition the distance between the surface of the sheet and the objective lens is maintained constant. Thus, the complicated focus servo mechanism such as utilized in prior art compact disc device and the like is not required, which simplifies the construction. Further, the amount of possible access can be increased, and the access time can be reduced substantially.

Further, the electric current exchanging mechanism for vibratingly moving the array is improved from the prior art rotary switch to the photoresist on the sheet and/or the limit switch, which enables to remarkably improving the reliability in the switching operation.

Further, when the unit assembly is constituted of the lens and the mirror thereby reducing the vibrating parts, it is possible to reduce the breakage of wires in the light emitting/receiving array, to enable safe and free vibration of the moving portion, and to provide a minute reading/writing operation, thereby enabling discrimination of a large amount of information on a unit area of the sheet.

## Claims

1. An optical head unit including a light emitting array, a mirror, a light receiving array, an objective lens, a light sensitive sheet for recording information, and drive means for moving the sheet, for enabling writing/reading of the information on the sheet when stationary characterized in that said light emitting array, said mirror, said light receiving array, and said objective lens integrally constitute a light emitting and receiving unit assembly.

2. An optical head unit according to claim 1, characterized in that said light emitting and receiving unit assembly comprises the light emitting array in the upper portion, the light receiving array in one side portion, and the objective lens in the lower portion, that said mirror is a half mirror, that the light from the light emitting array to the objective lens extends vertically and the half mirror is provided in the path of the light at an angle of 45 degrees, and that the mirror refracts the light to the light receiving array.

3. An optical head unit according to claim 2, characterized in that the light emitting array and the light receiving array are located at opposite locations.

4. An optical head unit according to either of claims 1 and 3, characterized in that said mirror is a prism, that the light from the light emitting array is refracted by the prism and directed to the sheet through the objective lens, and that the light reflected from the sheet is directed to the light receiving array through the prism.

5. An optical head unit according to claim 1, characterized in that said sheet comprises a plurality of sheets wound on a plurality of bobbin rollers and a center roller, with one end of each sheet being wound on each bobbin roller and the other ends of the sheet being wound on the center roller, that a level rollers is arranged between the center roller and each bobbin roller, and that said near to the surface of the sheet, and in operation, said two mirrors are rotatable by the same angle and at the same time, said mirror spaced from the sheet receives light from the multi-head and reflects the light to one of the two mirrors located near to the sheet, said one of two mirrors reflects the light to the other of the two mirrors, and said other mirror reflects the light vertically to the surface of the sheet, and that said integral unit assembly is disposed opposing the level roller and rotatably around the axis of the rotation of the level roller.

6. An optical head unit according to claim 5, characterized in that the integral unit assembly is constituted of either one of claim 2 through claim 4.

7. An optical head unit including a light emitting array, a mirror, a light receiving array, an objective lens, a light sensitive sheet for recording information, and drive means for moving the sheet, wherein the reading/writing operation is performed when the sheet is stationary condition of the sheet, characterized in that the mirror and the objective lens are integrally connected to a drive portion which is movable relative to a fixed portion consisting of the light emitting array and the light receiving array.

8. An optical head unit according to claim 7, characterized in that said drive portion and the fixed portion are mounted on a supporting member, with the fixed portion being fixed to the supporting member, and the drive portion being vibratingly movable on the supporting member.

9. An optical head unit according to claim 7 or 8, characterized in that the mirror is of a stepped configuration.

10. An optical head unit according to either one of claim 7 through claim 9, characterized in that the lens of the drive portion is located in the direction perpendicular to the direction of the movement of the sheet.

11. An optical head unit according to either one of claim 7 through claim 9, characterized in that the lens of the drive portion is located in the direction parallel to the direction of the movement of the sheet.

12. An optical head unit according to either one of claim 7 through claim 9, characterized in that the lens of the drive portion is located in the direction intersecting the direction of the movement of the sheet.

13. An optical head unit according to either one of claim 7 through claim 9, characterized in that the lens of the drive portion is located in the direction parallel to and intersecting the direction of the movement of the sheet.

14. An optical head unit according to either one of claim 7 through claim 13, characterized in that the light receiving array is arranged in the direction perpendicular to the surface defined by the light emitting array and the driving unit, and that the stepped reflective mirror refracts the optical information from the position most remote from the surface of the sheet to the position on the sheet most remote from the light emitting array, and refracts the optical information from the position nearest to the surface of the sheet to the position on the sheet nearest to the light emitting array.

15. An optical head unit according to either one of claim 7 through claim 14, characterized in that the light emitting array and the light receiving array are located at opposite positional relationship.

16. An optical head unit including a light emitting array, a light receiving array, an objective lens, a light responsive sheet for recording information, and drive means for moving the sheet, wherein the writing/reading operation is effected when the sheet is stationary, characterized in that the optical information from the light emitting array is transmitted to the objective lens through a series of optical fibers.

17. An optical head unit according to claim 16, characterized in that the series of optical fibers are constituted of a moving unit assembly.

18. An optical head unit according to claim 16, characterized in that the series of optical fibers and the objective lens are constituted of a moving unit assembly.

19. An optical head unit according to claim 16, characterized in that one ends of the series of optical fibers near to the objective lens are constituted of a moving unit assembly.
